# EUROPEAN PATENT APPLICATION

(11) **EP 1 795 748 A1**
(43) Date of publication of application: **13.06.2007**
(21) Application number: 04727188.7
(22) Date of filing: 14.04.2004
(51) Int. Cl.: F03D 3/04, F24J 2/42

(54) **METHOD FOR CONVERTING AIRFLOW LOW-GRADE ENERGY**

(71) Applicant: CLOSED JOINT-STOCK COMPANY "MGK" "INTERGELIOECOGALAXY", Moscow, 107996 (RU)
(72) Inventor: CHABANOV, Alim Ivanovich, Alushta, 98517 (UA); SYCHEV, Michail Parfenovich, Minsk, 220002 (BY); EROCHOV, Nikolai Michailovich, Minsk, 220004 (BY); SCHUKIN, Georgii Lukich, Minsk, 220017 (BY); SIDORENKO, Jurii Petrovich, Minsk, 220071 (BY); KOROLEV, Vladislav Mihailovich, Moscow, 129327 (RU); CHABANOV, Vladislav Alimovich, Moscow, 119517 (RU); FILIPENKO, Evgenii Semenovich, Simferopol, 95000 (UA); BAZHENOV, Andrei Nikolaevich, Simferopol, 95000 (UA); SMARZH, Ivan Iljich, Simferopol, 95011 (UA); ANDRIANOV, Ivan Timofeevich, Simferopol, 950053 (UA); MARTYNOV, Vladimir Georgievich, Simferopol, 95000 (UA); ALTUHOV, Boris Ivanovich, Simferopol, 95000 (UA); GORODOV, Michail Ivanovich, Simferopol, 95034 (UA); MATASOV, Rev Alexandrovich, Cherkasy, 18024 (UA); ZHIGAJLO, Viktor Nikiforovich, Moscow, 117418 (RU); VORONKOV, Alexei Alexeevich, Moscow, 117042 (RU)
(74) Representative: Turini, Laura
(86) International application number: PCT/BY2004/000013
(87) International publication number: WO 2005/100783

(57) **Abstract**

The way of transformation of low-potential energy of airflow is applicable in powerful helio-energy producing. The way is based on formation in a vertical airflow the concentrically located power channels by a partition rigid and massive wind turbine on a number independent sections due to installation in an airflow light concentric energy-differentiative bushes between which compound blades are established, for example, from sheet steel. Thus external surfaces of the energy-differentiative bushes, executed mainly also compound and facilitated, are strapped with bandage ropes, and on surfaces and-or inside blades are placed wing holding rods, the ropes perceiving on the basic loading from an air stream, influencing on easy compound blades. Wing holding rods or ropes are fixed with a prestressing is relative bandage surfaces of energy-differentiative bushes, and also in case of high specific power consumption of the wind turbine, applied additional cross-section together pulling ropes or the strengthening edges located on surfaces of wing blades perpendicularly to holding rods, ropes. By means of similar rods, the ropes located along forming surfaces of energy-differentiative bushes, in independent sections of the wind turbine is created presstressing, high-strength and light bearing rope or a rod design. Last provides an opportunity of achievement of the maximal linear and angular speeds of surfaces of energy-differentiative bushes. The energy-differentiative bushes mechanically incorporate to independent bearing of rotation. The way is based also on formation independent electrogenerating sections, replacing the single low-speed electrogenerator, connected by means of the named independent bearing of rotation and magnetic poles with corresponding energy-differentiative bushes, and electric coils with magnetic conducting systems are placed motionlessly concerning base. Such design of the wind-turbogenerator allows to reduce considerably the charge of ferrous metal, aluminium and copper, to lower the cost price and to raise reliability, and also maintainability of the installations realizing a way.

In case of performance similar wind-turbogenerator the lowered or average capacity, can contain the energy-differentiative bush connected by means of components of blades and bearing prestressed rods with the second rotating bush on which poles of magnetic stimulating systems are fixed, and electric coils and magnetic conductors are placed on base in a free internal cavity of the specified bush.

In addition the way provides realization electroforous designs electrogenerating devices.

The way allows to create high-speed designs of powerful wind turbines, that allows to raise their efficiency and operation qualities, than the opportunity of creation powerful heliopower stations is provided.

## Description

### Technical Field

The present prospective invention concerns to sphere of creation of helio-energy installations in which heated up air and an airflow formed by him as a working-medium of power transformation is used.

### Background art

The way of transformation of energy of solar rays and natural wind, as one of concrete displays of a solar energy in an environment, in the electric energy, based on use of a principle of absorption of solar rays by a dark surface, heating of air contacting to a dark plate, his direction as an airflow in the wind turbine, jointed with the electrogenerator, and transformations of energy of an airflow to electric energy (see certificate of authorship of the USSR 1416745 "Power installation", F03 9/00, publ. 15.08.88). Lack of the given way is low efficiency of energy transforming in application to helio-energy systems of the raised capacity in which diameters of wind turbines have the significant sizes. It is connected by that the twisting moment created by airflow on peripheral sites of blades, is transferred through blades and other constructive elements of the wind turbine to its axis, making heavier all design and causing its deviations from optimum, from the point of view of achievement of high efficiency of technical decisions.

A number of other technical decisions is known in the field of transformation of a solar energy in electric, for example, the application of France "The collector of a solar energy of the raised efficiency" [see 2698682, F 24j 2/16, 2/20, 2/48, publ. 03.06.94], "The solar engine" [see certificate of authorship of the USSR 1625999, F 24j 2|42, publ. 07.02.91], and also others in which among those or other advantages and lacks the basic lacks similar to the previous technical decision take place.

Most the close technical decision to the way offered by authors on set of attributes and potentially possible technical results is the way based on application of a collector of a solar energy, connected with the help of the air channel with an internal cavity of the wind turbine, the chimney established in a cavity and jointed by means of a shaft with a rotating energy-transforming part of the electrogenerator, while the motionless energy-transforming part is fixed on the base, and with a vertical wing rotor established in a chimney, which each blade is executed as an aerostatic environment and the independent air-outlet placed inside it connected with a cavity of a chimney (see the certificate of authorship of the USSR 1386737 "The wind-solar electrounit ", F03 11/02, publ. 07.04.88).

Feature of the given technical decision is distribution of a single airflow, in general a flow of the gaseous environment of the cylindrical form, on separate channels, by means of vertical blades as aerostatic environments with independent air channels which transformation of energy creates independent transfers of the twisting moments to a shaft of the electrogenerator concentrating them, that allows to raise efficiency of energy-transforming. However design features of realization of the given technical decision do not allow to use it at creation of helio-energy installations of the raised capacity which could make a competition modern thermal power station.

All other technical decisions, known to authors on the investigated patent materials and the published scientific and technical information, do not reach the potential results connected to possible use of the specified way on the device "The wind-solar electrounit " regarding his basic maintenance of splitting of the general airflow on separate power channels.

### Disclosure of invention

The task of the present technical decision is creation of a way of transformation low-potential energy of an airflow in helio-energy systems at his passage through the wind turbine, jointed with the electrogenerator, substantial increase of efficiency opening opportunity of energy transformation and decrease in specific cost of the block wind turbine - generator in industrial high-power energy installations, technically and economically capable to replace heat-electric generating stations with ecologically harmful burning hydrocarbonic raw material.

Technical result of the present conceptual decision is the possibility to create wind turbines in diameter up to 50 meters and more for helio-energy systems capacity of 100 thousand in kWt and more, it is reliable to join them with electromechanical systems, transforming the mechanical energy received by means of blades of the wind turbine in the electric power.

Particular of technical results are increasing of reliability the wind-electric-energy unit, significant decrease in the specific charge of copper, aluminium and ferrous metals at construction of such units, qualitative improvement of their maintainability and others.

It creates a technical basis for designing helio-energy high-power installations which on technical and economic parameters surpass parameters of heat-electric generating stations with burning hydrocarbonic raw material and do attractive large capital investments in transformation of world energy producing in non-polluting, powerful and all-weather helio-energy producing.

The specified technical result at realization of the invention is reached by that concerning a known way of transformation of low-potential energy of progress of the gaseous environment, for example, a vertical airflow of the cylindrical form in helio-energy installations in the electric energy, the twisting moment based on creation by means of aerodynamic surfaces of blades of the wind turbine, resulted in rotation by an airflow around of an axis of a bearing shaft which is the constructive concentrator of mechanical energy, developed by means of distributed in space of an airflow of surfaces of rotating blades, and its transmitter to rotating energy-transforming part of the electrogenerator while the motionless energy-transforming part of the last is fixed concerning base, are available differences in the fact, that transformation of low-potential energy of an airflow in electric energy carry out by creation the parallel energy-transforming channels concentrically located in cross-section of an airflow for what on a site between two his cross-sections limiting space of wind-turbo-mechanical converting process, place concentrically located from each other, mainly independent on kinematics, the energy-transforming sections, supplied with independent bearings of rotation and having mainly various angular speeds of rotation around of the general axis with greatest possible, mainly identical, linear speeds on which structurally dismember typical wind turbine as single, rigid, heavy and low-speed energy-transformer and in which structure include the energy-differentiative bushes fixing borders of energi-transforming channels, which bottom and top bases are located concentrically in parallel planes of the specified cross-section, and their forming-structures are focused along an airflow, and with the independent sites fixed between them light, for example, compound blades, thus to energy-differentiative bushes give the integrated functions which are carried out by heavy and low-speed shaft in typical wind turbines which are realized by means of the created system rotating, distributed in space and the working in parallel power elements independently mounted, served and strengthened in prestressed designs, and parallel interaction of the specified power elements provide by integration of parallel flows of mechanical energy as, transformed to the special electric form, with the help of the named electrogenerator which carry out by creation of concentrically located and distributed in space electrogenerating sections, each of them is as much as possible approached directly to corresponding sites of producing of mechanical energy of rotary movement, thus motionless energy-transforming parts of electrogenerating sections place by means of the bearing ring concentric platforms established on base concerning which are fixed, for example, electric coils with magnetic conductors and bearing designs of the specified independent bearing of rotation, and between bearing ring concentric platforms create technological apertures and adaptations, including adjustable deflectors by means of which provide controlled promotion of an airflow through formed energy-transforming channels and carry out assembly and repair-preventive works, and mobile energy-transforming parts of electrogenerating sections carry out by means of rotating energy-differentiative bushes to which are fixed energy-initiating means, for example, constant magnets, and mobile constructive elements of independent bearing of rotation, thus external surfaces of the energy-differentiative bushes executed from light materials, providing an opportunity of their high-speed rotary movement, pull together in parallel the bases with high-strength bandage ropes with the certain step along forming and fix the last concerning cases of energy-differentiative bushes, for example, by means of vertical constructive elements, available along their forming, in particular metal mortgage products, and fixing connections, with which help attach to energy-differentiative bushes independent sites of blades rotating around of the general axis and, in particular, constructive elements of independent bearing of rotation, thus special parameters electric energy, produced by electrogenerating sections, having independent multiphase vector characteristics with various spatial and time shifts, are synchronized by means of semi-conductor converters and control devices, and thus producing by the distributed electrogenerator of total electric energy, including delivered to external consumers, is under control influence of the computer center and is stabilized due to redistribution of loadings depending on a technical condition separate of electrogenerating sections, energy-differentiative bushes and adjustable technological modes of all energy-transforming process.

As essentially new way of transformation of low-potential energy of airflow by virtue of his unusual features, it can be complicated for understanding is above stated. Therefore additional explanatories below are stated.

The essence of an offered way as follows from stated, will consist in the following.

Continuous cylindrical airflow, passing through the wind turbine, is dissected on a several parallel, concentrically located, airflows, in each of them the transformation of kinetic energy of moving air to mechanical energy of rotation of some device here again, on the same site, - mechanical energy in electric energy is independently made. As such sites can be a little or even much, the last defines significant advantages as capacity of a corresponding concentric site of total airflow will be transformed to electric capacity without transfer of intermediate mechanical energy to the central axis where in traditional designs the single electrogenerator is established in the case. But if there is no transfer of the twisting moment, for example, from periphery of total airflow to the center, and transformation of his kinetic energy in electric is carried out directly on the same peripheral site, previous sites of blades of the wind turbine can be accordingly facilitated. In integrated value it means significant reduction of total weight of blades and corresponding increase in speed limit of rotation and capacity of the turbine at its set diameter. It is the main sense of the offered way.

The second question as a matter of fact the given way consists already in application of the certain technological receptions for a possibility of transformation and use of kinetic energy of concrete sites - concentric sections from the general airflow. It is reached, in particular, by accommodation in each of the specified concentric sites of airflow the independent site of aerodynamic blades which take from him kinetic energy of rotary movement and transfer her here, on a place, to the electrogenerator, to be exact to his certain part - to electrogenerating section, without a shaft and the case of the generator, that is distributed in space by means of these sections, electrically connected in the general system.

There is a question how it is possible to fix these groups of blades in space? In this case for this purpose within the limits of each of concentric sites of airflow the pair of energy-differentiative bushes, also concentrically located among themselves is established, and to them these groups of blades are fixed. If diameter of the wind turbine, for example, is equal 50 m, and radial distances between each pair of energy-differentiative bushes is made only with 1 m then, the dimension of this group of blades makes less than one meter (the size on length of each blade). Hence, blades can be executed light, compound and bandage by prestressed rods or the ropes fixed with a pressure between corresponding energy-differentiative bushes. Thus and these bushes can be light, compound and strengthened by the bandage ropes on their external surfaces and strengthened by a mortgage products - also rods or ropes.

That in such design the energy-differentiative bushes bearing the group of blades could rotate, they should be supply with the independent bearings of rotation - the common for each pair connected by blades of energy-differentiative bushes or individual for each of them. These bearings of rotation can be established, in particular, directly under the bottom end face of the case of each of them, or from both end faces, and also can place by means of remote designs in an interval between energy-differentiative bushes (which should be free from blades in this place) or to be established much below them with application of intermediate designs. It is defined by a concrete variant of realization of a way, as well as type of used bearing of rotation (they can be realized and with application of magnetic backlashes with corresponding efforts of an attraction and air pillows between mobile and motionless parts of bearing of rotation, etc.).

Precisely as well electrogenerating section, depending on a variant of realization of a way, can place with the help of surfaces of energy-differentiative bushes, free from blades on which rotating parts of electrogenerating sections are fixed, and with the help of base, in particular, as motionless ring platforms with open spaces between the last for passage of corresponding concentric sites of airflow, with the motionless parts fixed on them electrogenerating sections. However, electrogenerating sections, as well as bearings of rotation, can be placed and is much lower than energy-differentiative bushes, with application of corresponding constructive decisions.

As the question is a new way in the below-mentioned description of the opportunity of realization of the given way the variant as much as possible simplified for which explanation it is required less figures is chosen, details and text explanatories. And certainly, such variant is not optimum for an industrial design of realization of a way, but optimum for the economical proof of a realizability of a way.

In particular, it is obvious, that between each pair of energy-differentiative bushes between which the group of blades is fixed, the free interval can be formed from blades which should be isolated, certainly, from passage airflow. In such intervals can be fixed and bearings of rotation, and electrogenerating sections and through which works on maintenance service of all components and elements of the wind turbine can conduct, in particular by means of the specified ring platforms (the last is extremely important). However, to pass to the description of similar, industrially effective variants is inexpedient at representation of the way of transformation low-potential energy of an airflow, it is a subject of development actually the wind turbines and helio-energy stations.

The stated technical decisions, according to a way of transformation of low-potential energy of a windflow under the prospective invention, amplify and are in part concretized by the additional differences raising in separate variants his efficiency, including in the field of economy of material resources and operational reliability.

In particular, difference of the offered way concerning the named prototype will consist also that mobile parts of electrogenerating sections carry out by means of ring-like disks, concentrically located from each other above corresponding bearing ring platforms with the help of the specified independent bearing of rotation, thus on ring-like disks fix the magnetic poles containing, for example, constant magnets with magnetic conductors, and mobile elements of independent bearing of rotation by means of which adjustment provide necessary size and stability of magnetic backlashes in electrogenerating sections, thus to bandage ropes of energy-differentiative bushes fix the wing holding ropes placed on aerodynamic surfaces and-or in internal cavities of blades in such a manner that they keep them under pressure of a high-speed airflow, and a wing holding ropes fix concerning cases of energy-differentiative bushes, than create a prestressed rope-rod light design, steady concerning all system of the forces working on energy-differentiative bush in conditions of raised angular speeds and transfer of the significant twisting moments, and rope-rod skeletons of energy-differentiative bushes fix by means of mortgage products in cases of the energy-differentiative bushes, in particular binding ropes, concerning mobile parts of independent bearings of rotation through specified ring-like disks due to installation of intermediate basic racks between energy-differentiative bushes and the last, and inside basic racks place binding ropes with a prestressing, forming the finishing rigid, strong and light channel for transfer of the twisting moments, axial and radial efforts and for passage of an airflow in created energy-transforming channels.

Besides difference will be, that create integrated system of synchronization of parameters of the electric power, produced by the distributed in space electrogenerator, concerning an external electric network by switching on of electric coils of electrogenerating sections through power semi-conductor switchboards in electric branches with in parallel - consecutive connections by means of which provide their operative switchings, than reach preliminary conformity of synchronizable parameters, and further carry out precision synchronization due to carrying out corrective updatings of force of energy-initiating fields in electrogenerating sections, for example, intensity of magnetic fields of excitation with the help of application sub-initiating electric coils with semi-conductor regulation of an electric current in them, and control of energy-saturation of created energy-transforming channels by means of application of regulators of intensity of an airflow on corresponding sites of energy-transforming technological process.

The specified technical decisions in the offered way allow to make reliable wind turbines in diameter of 50 meters and more, without application of heavy metal rotating designs as it takes place at known wind turbines with heavy shaft and because section of wind turbines, their energy-differentiative bushes of the offered design can be executed from light materials, external rotating of which surface is strengthened by prestressed ropes, the opportunity to remove strength restrictions for limiting increase of angular speeds of rotation of wind turbines is reached in structure of their rotating sections. Removal of restrictions in increase of speeds of rotation on strength characteristics of designs allow to reduce the charge of copper, ferrous metals and magnetic materials on manufacture of the set electric capacity in comparison with low-speed wind turbine and generator.

Thus decided advantage of such partitioned electrogenerator is provided in the field of maintenance service and repair when checkup can be carried out during work of electrogenerating sections, and even repair work can be carried out on one of them (as though inside the rotating generator) while others can be in normal operation. Besides helio elecrtric power station requires the powerful electrogenerator to auxiliary, first of all, for realization of multidaily stocks of thermal energy thermo accumulators which in known technical decisions is combined with the generator of the commodity electric power.

Regulation of speed of rotation of sections of wind turbine, formed by means of energy-differentiative bushes is provided also. It is made by updating of energy-saturation of airflow in parallel energy-transforming channels due to constructive control elements - autoadjustable deflectors (latches) established on ways of movement of airflow on an input in the wind turbine and on its output, and also on all preparatory technological succession of energy-transforming process.

Besides difference will be, that, at least in one of the electrogenerating sections serving auxiliary of energy-transforming process, use, as energy-initiating force, electronically - physical interaction of the rubed substances having connected electrostatic characteristics, for example, of a glass and ebonite due to what between their rubed surfaces forces of moving of electrons from one layer of substance in another are raised, than process of electroforous transformations of energy for what, for example, on a ring-like rotating disk which ground, form a thin layer of one of materials as donor surfaces of friction, and on a motionless ring platform establish slip rings on which as a reciprocal surface of friction form a thin layer the of electrostatically connected material is created, thus slip rings and electric communications between them carry out isolated from ground communications, and schemes of electric connections - providing their consecutive and parallel inclusions.

Difference will consist also that on a ring-like rotating disk the field of the peaked surfaces covered with a thin layer of substance with small work of an output of electrons is formed, and this layer of substance in addition cover with a material forming a donor surface of friction, and current collectors carry out as the soft brushes containing as elements of friction flexible electroconductors which surface is covered with a reciprocal layer the electrostatically connected material.

Last two technical decisions in the offered way are based that, on the one hand, some processes of energy-transforming of airflow in helio-energy installation can be carried out with application of high voltage, including a direct current, and on the other hand, constructive realization of a way with application of the rotating disks jointed with energy-differentiative bushes, allows to easily apply a electroforous principle of accumulation of an electric charge and a voltage. Thus the electrostatically connected superficial layers of rubed materials, one of which has properties to give, and another - to perceive the electrons, can be carried out thin enough to receive not only the raised voltage, but also necessary electric capacity for realization of those or other problems of energy-transforming. At a choice of energetically connected materials silicon materials with opposite types of conductivity - electronic and hole conductivities can be used also, and mechanical contacts between rubed surfaces can periodically interrupt and in parallel slip rings condensers can be connected.

Such technical decisions raise efficiency of a way as can be used, in particular for electrophysical influence on movement of airflow in a chimney and in independent energy-transforming channels of it.

The way carries out, in particular, as follows.

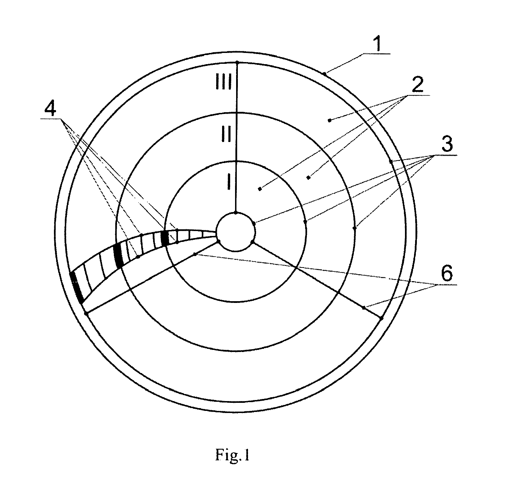

The airflow, which part of energy will be transformed in electric, moves in the space (fig 1) limited to a cylindrical surface 1 (a chimney). The cross-section of an airflow limited to a surface 1, dismembered on energy-transforming channels 2 by means of energy-differentiative cylindrical bushes 3 (on their fig 1 it is shown 4 piece), between which blades 4 (on fig 1 it is shown on one blade between cartridges 3 which horizontal projections represent two lines - the top and bottom edges) are fixed. Energy-transforming channels in an airflow are marked as I, II, III. For simplification of representation of a way between cartridges 3 it is not shown free concentric sites from airflow - zones of maintenance service, and the blade 4 represent the sum of groups of blades, independent for each channel, which connection with energy-differentiative bushes 3 are shown by incrassate lines. Sections and inclinations of blades in each group can be various, connected with the certain form on radius of all compound turbine.

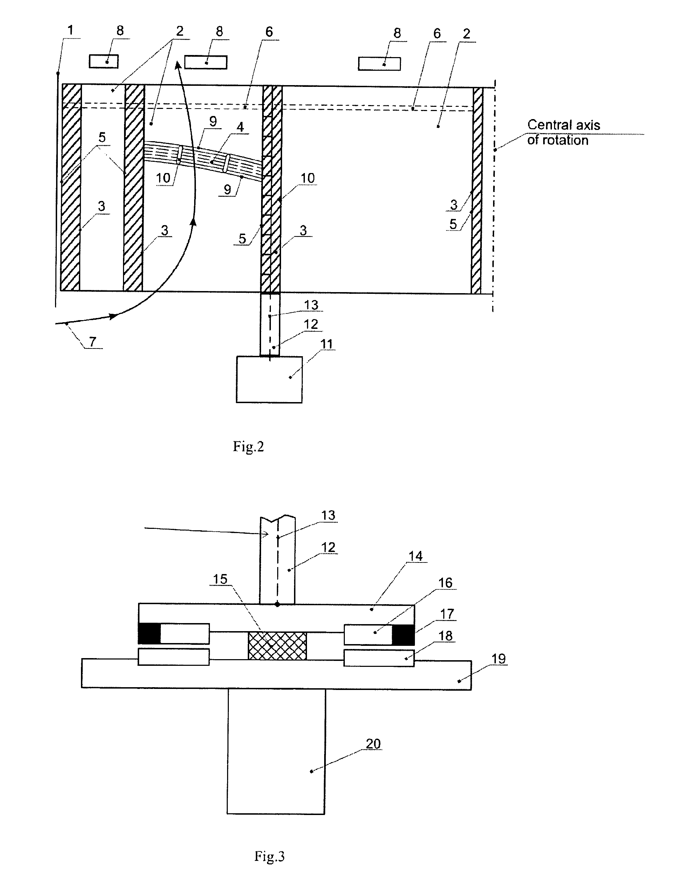

External surfaces of the light energy-differentiative bushes 3 made mainly from metal-backup materials, are pulled together with bandage ropes 5 (see fig. 2), located on all of height (on all length of their forming constructions), and on peripheral bushes of significant diameters they are located almost closely. To bandage ropes 5 on all energy-differentiative bushes 3 are fixed and prestressed radial ropes 6 which apply when the project provide the equation of angular speeds of rotation of bushes 3. At full equation of angular speeds of rotation of energy-differentiative bushes 3 radial ropes 6 bear only the radial efforts determined by prestressing. This variant (a case of equality of angular speeds of rotation of all or parts of energy-differentiative bushes) is one of two basic design decisions on realization of the offered way. Second of them is the variant at which energy-differentiative bushes have various angular speeds under the detailed design, but close to each other linear speeds of rotation, and the last on the maximum level are defined by speed of an airflow at the set geometry of blades. In this case between each pair of the energy-differentiative bushes connected by blades fixed to them, form the free radial backlashes closed for passage of airflow. Besides both basic design decisions can have sub-variants, connected with accommodation of the bases of energy-differentiative bushes. One of them is accommodation of their bottom and top bases (concentrically from each other) in two mainly horizontal planes - planes of the bottom bases and planes of the top bases. Another sub-variant is accommodation of a part of the bases of energy-differentiative bushes of the wind turbine, - that can be made structurally out as the separate turbine, - in the position lifted upwards in such a manner that an airflow consistently passes in the beginning through the bottom group of energy-differentiative bushes (through the bottom turbine), and then through the top group of energy-differentiative bushes (through the top turbine). Such consecutive technological cascades in process of energy-transforming can be carried out several.

On fig 2 the blades 4 are relative submitted by one fragment (the section in a vertical plane) in the power channel II which is formed by two energy-differentiative bushes 3 with fixed in them on all their height group (a radial site) of blades 4. Schematically shows passing through this channel of airflow 7. On an outlet of the channel II the same as other power channels, devices 8 for independent regulation of energy saturation of airflow 7 which represent, for example, automatically controlled deflectors are established, moving is relative each other and a ring aperture of the energy channel. Devices - deflectors 8, in this or that design, are established also on an input in energy-transforming section (that is from below) of differential wind turbine, which on fig 2 is not shown. In case of execution of differential wind turbine with mechanically untied independent sections (the basic variant of realization of a way), by deflectors 8 those energy-transforming sections are completely blocked from above and-or from below and connected with them electrogenerating sections which are subject to repair - in the switched - off delayed condition.

The form of an aerodynamic surface of blades 4 which can be carried out rather light and even flexible, is fixed additional by wing holding rods or ropes 9 which are placed on them by means of easy constructive elements. In case of performance of blades 4 flexible of sheets the sheet steel, fixed in the profile-making grooves executed on corresponding surfaces of energy-differentiative bushes 3 (on figs 2 are not shown), constructive elements of fastening wing holding ropes 9 can be executed by means of flutes on surfaces of blades and units of fastening and their prestressing concerning bandage ropes 5. In case of manufacturing flexible blades with application as their surfaces glass-films or other rather flexible materials, the constructional elements holding with the help of ropes their structure under pressure of an air stream, can be executed with application of tubes which form is set according to a designed structure of a surface of the blade 4. On a fragment of last (fig 2) the site cross-section rope couplers 10 is shown also, that is rods or ropes which on surfaces of blades place across wing holding ropes 9 and are fixed concerning them. Similar purpose rope or rod couplers 10 pass inside cases of energy-differentiative bushes 3 that is submitted by the example of the bush dividing channels I, II. If bushes 3 are executed on height from compound rings the rope couplers prestressed them, forming the uniform rigid case of energy-differentiative bush 3. Rope couplers 10 are fixed also concerning bandage ropes 5 and ropes 9, can pass inside cases of bushes 3 or outside, along their surfaces that is defined by variants of concrete designs. For realization of the offered way that rope couplers 10 connected bandage ropes 5 and ropes 9, and also radial ropes 6 if it is constructive they are applied, in strong a rope grid as a basis of durability and stability of all design at the raised angular speeds of rotation of partitioned wind turbine and at action on it of all system of forces, including axial efforts. The wind turbine on fig 2, as a unit, is submitted by its sum of sections, consisting of four energy-differentiative bushes 3and light flexible blades 4 fixed between them. The cross-section lines shown on blades 4 (figs 1), relative represent an arrangement of cross-section of rope couplers on their surfaces. Thus it is necessary to understand, that the last are applied not in all constructive realizations of the offered way.

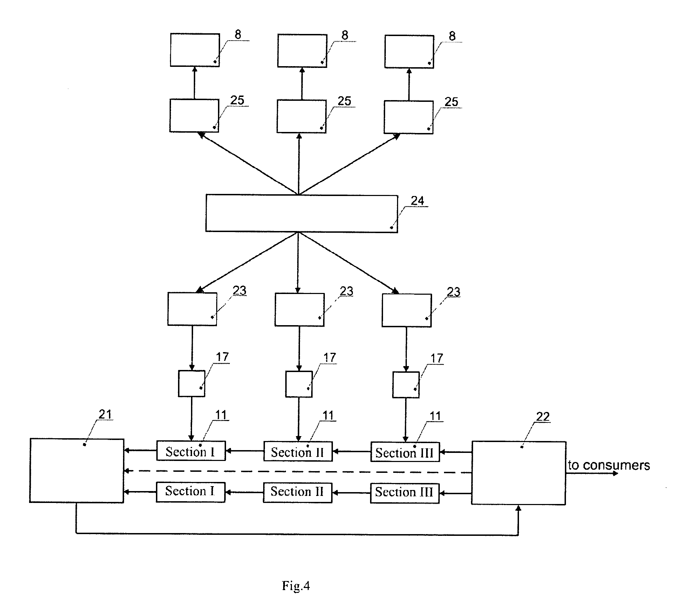

The energy-differentiative bushes 3 are connected with the energy-transforming electrogenerating block 11 through intermediate (hollow) basic racks 12 inside which binding ropes 13 are placed which are fixed by the top end to a rope grid of energy-differentiative bush 3, and by the bottom end - to a ring-like rotating disk 14 (fig. ) which is part of the electrogenerating block 11. Last represents one of electrogenerating sections of the single electrogenerator distributed in space and executed as a flat design of concentric disks of electrogenerating sections, located near, as follows from fig. 2, to sites where the working-out of mechanical energy in the wind turbine by means of influence of airflow 7 on the blades 4 is realizing. Intermediate basic racks 12 are made, for example, of cylindrical rings of small diameter (on fig 2 are not shown), prestressed during the process of installation by binding ropes 13 and transformed thus in the rigid constructive elements transmitting twisting moments and axial efforts with necessary safety factor and stability. Besides they form lateral apertures for passage of an airflow 7 in energy-transforming channels I, II, III, for example, from helio-transforming energy space which is located before an input in an internal cavity of the wind turbine (on fig 2 technological processes of preparation of an airflow of helio-energy installation are not shown). In the given variant of realization of a way, in accordance with figs 3, 4, binding ropes 13 are fixed is relative to a ring-like disk 14, straining concerning him intermediate hollow basic racks 12 and by that mechanically contact a mobile part of a bearing of rotation 15 which is rigidly fixed is relative to a ring-like disk 14.

The mobile part of electrogenerating section 11 in the submitted variant contains essentially important two elements: the device 16 for creation of the energy-initiating field, consisting, for example, from constant magnets, and the device 17 which are carrying out functions of a power element, in addition adjusting force of energy-initiating field and executed, for example, as electromagnetic system of sub-initiating. Devices 16, 17 are placed concentrically in two lines symmetrically relative to a bearing of rotation 15.

The motionless energy-transforming part 18 of electrogenerating section 11 represents two concentric lines of the electric coils located in magnetic conducting systems which represent two concentric lines of power windings of the electrogenerator fixed on a motionless bearing ring platform 19 in which the unrotative reciprocal part of a bearing of rotation 15 is located also.

The specified bearing ring platforms 19 are established in the given variant on bearings 20 of bases of the wind turbine and helio-energy installation in general and located concentrically from each other. Between them the technological apertures, special transitions by means of which carry out assembly and serving works are executed. On concentric bearing platforms, except for electric coils 18 with magnetic conductors, their current distributive, auxiliary energy-transforming and regulating systems which provide communications between electric coils, switchings in electric branches and switchings of branches by means of semi-conductor switchboards, means of power supply of bearings of rotation and another are located also. On mobile energy-transforming parts of electrogenerating 11, except for magnetic systems 16 and systems of magnetic sub-initiatio17 which can place and on a motionless bearing platform, the distributive electric circuits controlling both switching devices, and other power auxiliaries are settle down. In the certain designs on rotating concentric disks (from structure of elements of electrogenerating sections) constant magnets can are settle down only.

The electrogenerating section 11 (fig. 4), (in this case there is three sections according to number of energy-transforming channels I, II, III,) by the electric coils by means of the semi-conductor switchboard 21 incorporate in consecutive electric branches which structure can be adjusted. The last are connected to the semi-conductor synchronizer 22 which output is connected to a consuming electric network system. The power elements 17 adjusting size of a energy-initiating field in electrogenerating sections, are electrically connected through control devices 23 to the computer center 24, one of which functions is the control of process of synchronization of parameters of energy-transforming channels with parameters of a consuming electric network system, and also distribution of energy saturation of these channels and their electric loadings on conditions of the current producing of the commodity electric power and, besides - on conditions of producing of the electric power for auxiliary (including charging of thermo accumulators). Energy saturation of the airflow 7 directed in energy transforming-channels I, II, III, is adjusted by means of automatically controlled devices 8 connected through the devices of control 25 with computer center 24.

Realization of a way, in the variant resulted on figures, is carried out as follows.

The airflow 7 acts in an internal cavity of compound differential wind turbine which dissects it on three energy-transforming channels I, II, III by means of energy-differentiative bushes 3 between which blades 4 are fixed. By means of kinetic energy of a moving airflow and difference of pressure Δ in it in area of the wind turbine, influencing on blades 4, there is a twisting moment enclosed to them concerning the central axis of rotation. Under influence of this moment the energy-differentiative bushes 3 start to rotate, transferring the moment of rotation to electrogenerating sections 11. The wind turbine is extremely simplified and easily feasible for the diameters in 50 meters and more. This fact is principle for the next fact: the bigger size of its diameter allows at the smaller entrance temperatures and speeds of airflow to receive high efficiency theoretically.

Fragmentation of the single energy channel of airflow 7 on parallel concentric energy-transforming channels (at big diameters of the wind turbine them is much more) creates at designing of the wind turbine unique opportunities. Concentric bushes 3 can be carried out from a light metal-backup material, and rotate everyone on the bearing therefore they can reach speed limits of rotation. Mechanical durability at rotation of energy-differentiative bushes 3 on speed limits is provided with way of their manufacturing: on height they realize of lines of the low compound rings accessible to precision processing on the modern program equipment section by section which bandage by high-strength ropes 5, 9 after forming and pull together with ropes 10. On corresponding surfaces of cartridges, even during manufacturing their components, grooves of the designed form in which sheets from steel are placed became the corresponding sizes are carried out. Thus metal sheets get the form of grooves into which they are inserted, and form surfaces of blades which can be carried out volumetric, with section in the airflow, reminding the form of a wing of the plane. At such exclusive simplicity of manufacturing of energy-differentiative bushes and energy-transforming channels, the last can be established in such quantity that the size of blades between them was constructive also economically expedient. Bearings of rotation 15 in the given design are the most complex element, however, the saved up experience of designing with application of magnets, gas (on air pillows) and liquid greasings allows to carry out their simple, reliable and cheap.

The twisting moment formed by blades 4 under influence of airflow 7, is transferred to a rotating disk 14 on which constant magnets 16 and power elements magnetic sub-initiating 17are fixed. The raised linear speeds of movement (rotation) of magnetic poles (elements 16, 17) on rotating concentric disks 14 allow to carry out electric coils 18 and their magnetic conductors rather light, at small number of coils with easily feasible high-quality isolation. It allows to carry out electrogenerating section in a high-voltage - on 10 and even 35 kV due to that the quantity of used expensive copper and dynamo steel is extremely reduced. It allows accordingly and to lower considerably cost of such partitioned electrogenerator concerning cost of the classical generator of the similar capacity jointed by the shaft with shaft of low-speed wind turbine. Besides features of corrective maintenance of electrogenerating sections allow to not buy for storage in a warehouse of the expensive reserve electrogenerator, providing rapid replacements of electric coils, in case of need, not stopping all process of energy transformation. Feature of realization of the offered way is simplicity of multiple constructive maintenance of the maximal cheapness and speed of corrective maintenance that creates a basis of high efficiency of a way. Extremely attractive variant of realization of the offered way frequently being basic, is accommodation of constant magnets of electrogenerating sections on rotating energy-differentiative bushes, and electrogenerating coils and their magnetic conductors - in backlashes between the energy-differentiative bushes, closed, at least, from below ring platforms.

Balancing of energy-saturation of energy-transforming channels I, II, III is carried out by latches, for example film deflectors 8, which adjust speeds of airflow 7 in each of channels I, II, III individually, down to the full termination of airflow through any of channels. There can be designs of the offered way and thus when separate section of the wind turbine as two energy-differentiative bushes 3, with the blades 4 fixed in them and with electrogenerating sections 11 connected to them, are moved out from energy-transforming channels in a zone of service whereas others section of the wind turbine continue to work, perceiving on themselves all capacity of airflow 7 by means of devices 8.

Integrated complex of synchronization of energy-transforming processes with parameters of a consuming electric network system is carried out, at influence the general airflow 7 on the wind turbine, as follows.

The certain groups of electric coils of electrogenerating sections I, II, III (11) connects in series connection and can re-commutate by the semi-conductor switchboards 21 located on bearing concentric platforms 19. Configuration of electric branches thus allows to establish their voltage according to a voltage of a consuming electric network system, including at the general change of speed and capacity of airflow 7 in the certain time intervals.

Electric lines parallelize among themselves in the semi-conductor converter 22 in which the synchronous switching on of energy installation in a consuming electric network system is carried out also. Exact adjustment of synchronizable parameters in the given variant of realization of a way is carried out by means of constructive power elements 17, assigners control influence on energy-initiating fields (in addition to synchronizing algorithms of electronic control). In our example sub-initiators, influence on a magnetic stream in the air backlash formed between constant magnets 16 and electric coils 18. Power elements 17 - electric windings on magnetic conductors influence a magnetic stream within the limits of a knee on a magnetic curve in a range up to 7 percent from the general size of a magnetic stream. Influences on power elements 17 through control devices 23 are carried out by the computer center 24 which make operative decisions during synchronization and invariant control influences according to the program of producing of the electric power to consumers and short-term forecasts of weather conditions in an environment and, hence, - forecasts of energy saturation of airflow 7. Thus the computer center 24 through control devices 25 influences position of automatically controlled latches - deflectors 8, and also on other devices and the systems influencing on general energy saturation of airflow 7 (on figs. 2, 3 they are not shown), than performance of the program of the current producing and working-out of the commodity electric power is provided.

Fragmentation of the classical generator on flat concentric electrogenerating sections, except for reduction in price and increase of reliability electrogenerating designs, opens also a number of other new opportunities strengthening efficiency of the offered way.

In particular, electrogenerating disk designs allow to apply and other physical principles of reception of an electric voltage, in the greater degree corresponding to some needs of auxiliary of energy-transformation process. A classical example of such needs is submission of high voltage in a direct current on the air cleaners known in metallurgical and other kinds of manufactures. Besides other highly effective technical decisions are developed also in the field of influence on airflow in a chimney.

According to this fact, in the disk of electrogenerating section 11 instead of magnetic systems 16, 17 corresponding thin-film coverings can be applied, for example, silicon, and instead of electric coils current collectors which surfaces of friction can be formed due to drawing thin films the electrostatically connected substance can be established.

In this case under electrostatically - energetically connected substances pairs those substances are understood, one of which have strongly realized properties to loss of electrons, and others - to their purchase as a result of mechanical and thermal contact of these substances, to friction. It is possible to attribute classical historical pairs of them - glass and ebonite or modern substances on the basis of silicon with the additives creating in one electronic, and in others "hole" conductivity, etc.

Making t of thin layers of energetically connected materials is important that it was possible to receive not only high voltage, but also significant electric currents through them. It is possible to use such rotating disk in diameter, for example, 10 meters for creation up-to-date electroforous machines with modern multilayered and thin coverings of the materials, allowing to reduce work of an output of electrones for limits of surfaces and their transition from one surface in another. Electron-hole -n transition, in particular, in such machine can be realized and periodically interrupted, with application of condensers for stopping arcing.

Taking into account such features, the electroforous principle is applicable at realization of the offered way with local technological problems.

If on a surface of a rotating disk 14 the field of low peaked surfaces, on all his circle is formed, and they are covered with substance with small work of an output of electrons from his surface around of these peaked surfaces electronic little clouds will be formed in view of additional display of effect of the metal sharp ends connected with ground circuits. In that case at a covering of peaked surfaces and rubed surfaces of current collectors thin layers of energetically connected materials, necessary efforts of friction between the last will be insignificant for reception of essential capacities at a high electric voltage, and it essentially increases durability of rubed contacts. Current collectors, and their quantity it can be rather significant, incorporate in parallel-serial electric circuits. At the certain design data such the electroforous electrogenerator and at the certain temperature and high-speed parameters of airflow flowing round it the efficiency of energy-transforming appears high.

The technical decisions resulted as variants of realization of the offered way, open his economically effective design opportunities, allowing to carry out construction rather powerful helio-energy installations which on the technical and economic parameters surpass the thermal power stations working on hydrocarbonic power raw material.

Realization of a way in accordance with item 1 of the claims of the invention creates a basis of his economic efficiency, however his greatest advantages are shown at realization together with it of those or other dependent items of the invention, according to concrete conditions of designing, construction and operation of helio-energy installations with application of the offered way.

### Brief description of drawings

On fig. 1 the image of structure of the organization of power channels in the plan is submitted.

On fig 2 the schematic image of a composition of power channels in vertical section is given.

On fig. 3 the basic scheme of the electrogenerating energy-transforming block is resulted.

On fig 4 the basic scheme of integrated synchronization is submitted.

## Claims

1. The method of transformation of low grade energy of the air flow, for example, of vertical air flow of cylindrical form in heliopower installations, into electric power, based on the torque moment created by the wind turbine blade aerofoil surfaces rotated by the air flow around the axis of the main shaft being the structural concentrator of the mechanical energy generated by the surfaces of rotated blades distributed in the air flow space, as well as being the transmitter of this mechanical energy to the power generating rotating part of electric generator while energy generating fixed part of the latter is fixed in relation to foundation base that differs in the fact that the air flow low grade energy is transformed into electric energy by creation of parallel power transforming channels located concentrically in the cross-section of the air flow, for which purpose between two airflow cross-sections that limit the space of the wind-mechanical transformation process energy transforming sections are located concentrically to each other, mainly cinematically independent, with independent rotation supports, with mainly different angle speeds around general axis with maximum possible linear speeds, on which standard wind turbine is structurally disjoined as a single, rough, hard and slow-speed power transformer, which include energy differentiating muffs that fix borders of energy transforming channels the lower and upper bases of which are located concentrically in parallel planes of mentioned cross-sections, and their generating lines are positioned along the air flow, and independent areas of lightweight, for example, jointed blades fixed between them add integral functions to power differentiating muffs, fulfilled by hard and slow-speed shaft in standard wind-turbines, which are realized by the system of created rotating power elements distributed in space, acting in parallel, installed standalone, serviced and hardened in pre-stressed structures, besides parallel interaction of indicated power elements is provided by integration of parallel flows of mechanical energy in the form transformed to special electrical form using mentioned electric generator, which is made from electric generating sections concentrically located and distributed in space, each of which is maximally moved closer to respective areas of generation of the mechanic energy rotating movement, where fixed energy transforming parts of energy converting sections are located using carrying circle concentric platforms installed on foundation base in relation to which, for example, electrical coils with magnetic circuits and load-carrying structures of indicated standalone rotating platforms are fixed, besides, process-oriented openings and devices are provided between carrying circle concentric platforms as well as adjustable slide dampers are installed to provide controllable air flow movement thought energy generating channels and help make erection and maintenance works, and moving energy transforming parts of energy generating sections are made of rotating energy differentiating muffs with energy agitating devices, for example, constant magnets and moving structural elements of standalone rotating supports fixed on them, external surfaces of energy differentiating muffs made of light materials to provide high-speed rotation are tightened in parallel to foundations with high-strength binding ropes incrementally along generating lines and the latter are fixed in relation to the energy differentiating muff frames, for example, by vertical structural elements located along their generating lines, especially metal inserts and fixings with which standalone blade areas rotating around general axis are fixed to energy differentiating muffs, output parameters of the electric power produced by electric generating sections that have independent multiphase vector characteristics with various space and time shifts are synchronized with semiconductor converters and control devices, and total electric energy produced by distributed electric generator including the energy supplied to external consumers is controlled by computer center and stabilized by reallocation of loads depending on technical condition of separate electric generating sections, energy differentiating muffs and adjusted technological modes of the whole energy transforming process.

2. The method of the air flow low-grade energy transformation according to P.1 differs in the fact that moving parts of electric generating sections are made as ring disks located concentrically in relation to each other above respective carrying ring platforms with indicated standalone rotating supports, with magnetic poles fixed on ring disks, which magnetic poles may contain, for example, permanent magnets with magnetic cores and moving elements of standalone rotating supports which may be adjusted to provide required value and stability of magnetic gaps in electric generating sections, binding lanyards of energy differentiating muffs have blade retaining cables fixed placed on aerodynamic surfaces and/or inside blades in such a way that they keep them under the pressure of high-speed air flow, where blade retaining cables are fixed in relation to power differentiating muff frames thus creating pre-stressed lanyard-grid structure resistant to the whole system of forces that affect energy differentiating muffs in conditions of increased angle speeds and transfer of considerable torque effects, besides, rope frames of energy differentiating muffs are fixed by inserts to energy differentiating muff frames, in particular, binding ropes in relation to moving parts of standalone rotating supports through mentioned ring disks by installation of intermediate supports between energy differentiating muffs and the latter, besides pre-stressed binding ropes are placed inside supports thus generating final hard, strong and light channel to transfer torque effects, axial and radial forces and transfer of the air flow to energy converting channels.

3. The method of the air flow low-grade energy transformation according to P.P.1, 2 differs in the fact that an integral circuit of synchronization of electric energy parameters is created, where electric energy is generated by the electric generator distributed in space, in relation to external electric network by embedding of electric coils of electric generating sections through power solid-state switches in network arms with parallel-serial connections which provide operative toggling to achieve preliminary matching of synchronizing parameters, then high-accuracy synchronization is achieved by revised correction of the force of energy exciting fields in electric generating sections, for example, of intensity of magnetic field agitation using pre-agitating magnetic coils with semi-conductive control of electric current in them and control of the energy content of created energy transforming channels by using regulators of air flow intensity in respective areas of energy transforming technological process.

4. The method of the air flow low-grade energy transformation according to P.P.1, 2, 3 differs in the fact that at least one electric generating section that maintains its own auxiliaries uses energy generating force of electronic and physical interaction of rubbing substances with matched electrostatic features, for example glass and ebonite, thereby electronic transfer forces from one substance layer to the other are generated between rubbing surfaces thus creating the process of electronic energy transformation for which, for example, a thin layer of one material is created on grounded rotating ring disk as donor rubbing surface and another thin layer of electrically matched material is made as a response rubbing surface on current collectors installed on fixed ring platform, current collectors and electric connections between them are made separated from grounding connections and electric connection diagrams are made providing both serial and parallel connections.

5. The method of the air flow low-grade energy transformation according to P..4 differs in the fact that rotating ring disk has a field af pointed surfaces generated covered with thin layer of the substance with low electronic work function, where this substance layer is additionally covered with the material that generates donor friction surface, and current collectors are made as soft brushes that contain flexible electric conductors as friction elements with the surface covered with the response layer of electro statically matched material.
